(19) Europäisches Patentamt / European Patent Office / Office européen des brevets

(11) **EP 2 023 476 A2**

(12) **EUROPEAN PATENT APPLICATION**

(43) Date of publication:
**11.02.2009 Bulletin 2009/07**

(51) Int Cl.:
**H02M 7/5387** $^{(2007.01)}$

(21) Application number: **08014078.3**

(22) Date of filing: **06.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.08.2007 JP 2007204870**

(71) Applicant: **Hitachi Appliances, Inc.**
**Minato-ku**
**Tokyo (JP)**

(72) Inventors:
 • **Dongsheng, Li**
 **Tokyo 100-8220 (JP)**
 • **Yasuo, Notohara**
 **Tokyo 100-8220 (JP)**
 • **Yoshitaka, Iwaji**
 **Tokyo 100-8220 (JP)**
 • **Yoshiaki, Kurita**
 **Shizuoka-shi**
 **Shizuoka (JP)**

(74) Representative: **Kirschner, Klaus Dieter et al**
**Puschmann & Borchert**
**Partnerschaft**
**Postfach 10 12 31**
**80086 München (DE)**

(54) **Converter apparatus**

(57)    A converter apparatus capable of a stable startup which realizes detecting the initial values of the AC voltage phases necessary for controlling the converter apparatus without using voltage and current sensors for respective phases, wherein the on/off control signals (12) are sequentially supplied to the switching elements of the upper arm or the switching elements of the lower arm, the switching elements of the upper and lower arms constituting the converter circuit; the DC bus current is detected when the switching elements supplied with the on/off control signals (12) are being turned on or off; the currents for respective phases are generated on the basis of the detected DC bus current and the sequence of the on/off control signals (12); and a stable startup operation can be performed by estimating the AC power source voltage phases, the AC power source voltage frequency and the sequence of the AC power source voltage phases on the basis of the generated currents for respective phases.

FIG.1

EP 2 023 476 A2

**Description**

BACKGROUND OF THE INVENTION

The present invention relates to a converter apparatus which converts alternating current into direct current.

Recently sine wave PWM (pulse width modulation) converter apparatuses have been widely used as power converters that can suppress the harmonic current components generated by the converters in the process of converting alternating current into direct current.

A PWM converter apparatus usually has a reactor connected between an AC power source on the input side and the PWM converter apparatus itself, and a smoothing capacitor and a load connected in parallel between the DC terminals on the output side of the PWM converter apparatus. When power is supplied from the power source to the load, the PWM converter is so controlled as to cause sinusoidal currents to flow in phase with the power source voltages. On the other hand, when power is returned (re-generated) from the load to the power source, the PWM converter is so controlled as to cause sinusoidal currents to flow in inverse phase with the power source voltages.

To be concrete, an instruction is generated to adjust the input current amplitudes in such a manner that the DC voltage across the smoothing capacitor takes a preset value; the instruction is used as an instruction value for the currents in phase with the power source voltages; and the input AC voltages fed into the PWM converter are so controlled that the detected values of the input currents may coincide with the instruction value.

In order to control the PWM converter in this way, it is essential to detect the phases of the power source voltages and the currents fed into the converter.

The development of such sine wave PWM converters as mentioned above started back in the past and many types of such sine wave PWM converters have been proposed.

"A Scheme of Power Source Voltage Sensorless Three-Phase PWM AC/DC Converter" which employs the method of controlling a three-phase PWM converter without using sensors for the power source voltages, was proposed in the transaction of the Institute of Electrical Engineers of Japan (IEEJ), Vol.114-D, No.12, Dec., 1994. According to this method, sinusoidal currents in phase with the power source voltages can be caused to flow without detecting the phases of the power source voltages. Also, JP-A-2006-25587 discloses the method wherein the signals representing the zero-cross of the power source voltages are used only at the time of startup and then the control is shifter to the phase-sensor-free control when the ordinary operation is initiated.

SUMMARY OF THE INVENTION

A variety of conventional techniques that need not use the sensors for the power source voltages have been proposed as described above. According to the three-phase PWM converter using no power source voltage sensors, disclosed in the above mentioned transaction of IEEJ, the PWM converter must be subjected to a switching operation at appropriate phases and the phases of the power source voltages must be estimated by using the voltage and current information obtained through the switching operation, in detecting the initial phases of the power source voltages at the time of starting up the PWM converter.

Therefore, it is necessary with this type of PWM converter to take into consideration a means for avoiding excessive current (referred to also as over-current) during the switching operation. This requirement may make it improper to apply this type of PWM converter to some purposes (appliances).

Further, it is necessary to provide at least two high-performance current sensors and a high-performance digital controller in order to detect and process such current information as mentioned above. These high-performance devices lead to high costs.

Furthermore, when the PWM converter is started up with a load connected thereto, the changeover from the diode rectification mode to the PWM control mode is necessary. Since the voltage developed across the smoothing capacitor as a result of charging through the diode rectification is equal to at most the peak of the power source voltage, excessive modulation (referred to also as over-modulation) occurs if the input voltage instruction value fed to the converter at the time of startup is large. If the input voltage instruction value fed to the converter at the time of startup is small, over-current occurs since the difference between the voltages applied to the AC reactor becomes large.

As conventional countermeasures against the above described undesirable event are known a system wherein the smoothing capacitor is initially charged up to the boost voltage by a separately provided power source and a system wherein the DC voltage instruction value at the time of startup is gradually increased from the diode-rectified voltage to the boost voltage. Even with these systems, however, the diode-rectified voltage is low in principle if there is a load on the DC side. Accordingly, the voltage the converter can output is low and therefore the effect of suppressing inrush current is considered to be slight.

The object of the present invention is to solve the above mentioned problems and to provide a converter apparatus which can be stably started up by estimating, without using voltage sensors and current sensors, the phase angle, the frequency and the phase sequence of the AC power source voltages, on the basis of the direct current flowing through the bus bar at the time of switching operation.

In order to attain the object of the present invention, on/off control signals must be sequentially supplied to the plural switching elements constituting a converter circuit, and at least one of the items, that is, the phase angle of the AC power source voltages, the power source frequency and the sequence of the phases, must be detected by using the relationships between the then flowing DC bus currents and the on/off control signals.

By so doing, there can be provided a converter apparatus which can be stably started up by estimating, without using voltage sensors and current sensors, the phase angle, the frequency and the phase sequence of the AC power source voltages, on the basis of the direct current flowing through the bus bar at the time of switching operation.

BRIEF DESCRIPTION OF THE DRAWINGS

Fig. 1 schematically shows the circuit configuration of a PWM converter apparatus as a first embodiment of the present invention;
Fig. 2 graphically shows the starting sequence for the converter apparatus as the first embodiment of the present invention;
Fig. 3 shows the converter apparatus as the first embodiment of the present invention and the control signals used in the detection of phases in the converter apparatus;
Fig. 4 illustrates how the control signals used in the detection of phase angle in the converter apparatus are generated in the first embodiment of the present invention;
Fig. 5 shows the waveforms of the three-phase voltages of the power source over three different phase regions during one period of time;
Fig. 6 shows an equivalent circuit in which current flowing paths corresponding to the phase region I are indicated;
Fig. 7 shows an equivalent circuit in which current flowing paths corresponding to the phase region II or III are indicated;
Fig. 8 shows the waveforms of the currents of respective phases derived from the direct current flowing through the bus bar in the first embodiment of the present invention;
Fig. 9 serves to explain the algorithm for phase calculation in the microcomputer used in the first embodiment of the present invention;
Fig. 10 is a flow chart for the process of charging the smoothing capacitor and detecting the phase angle of the power source voltages, used in the first embodiment of the present invention;
Fig. 11 shows the waveform of the detected U-phase current derived from the DC bus current and the waveform of the current obtained as a result of performing moving average on the detected U-phase current, in the second embodiment of the present invention;
Fig. 12 serves to explain the algorithm for phase calculation in the microcomputer used in the second embodiment of the present invention;
Fig. 13 is a table showing the relationships between the counter values and the sequence of phases, observed in the second embodiment of the present invention;
Fig. 14 depicts a converter circuit in the form of module as a third embodiment of the present invention;
Fig. 15 schematically shows the circuit configuration of a motor control module as a fourth embodiment of the present invention; and
Fig. 16 depicts a converter/inverter circuit in the form of module as the fourth embodiment of the present invention

DESCRIPTION OF THE EMBODIMENTS

Embodiments of the present invention will be described below in reference to the attached drawings.

[EMBODIMENT 1]

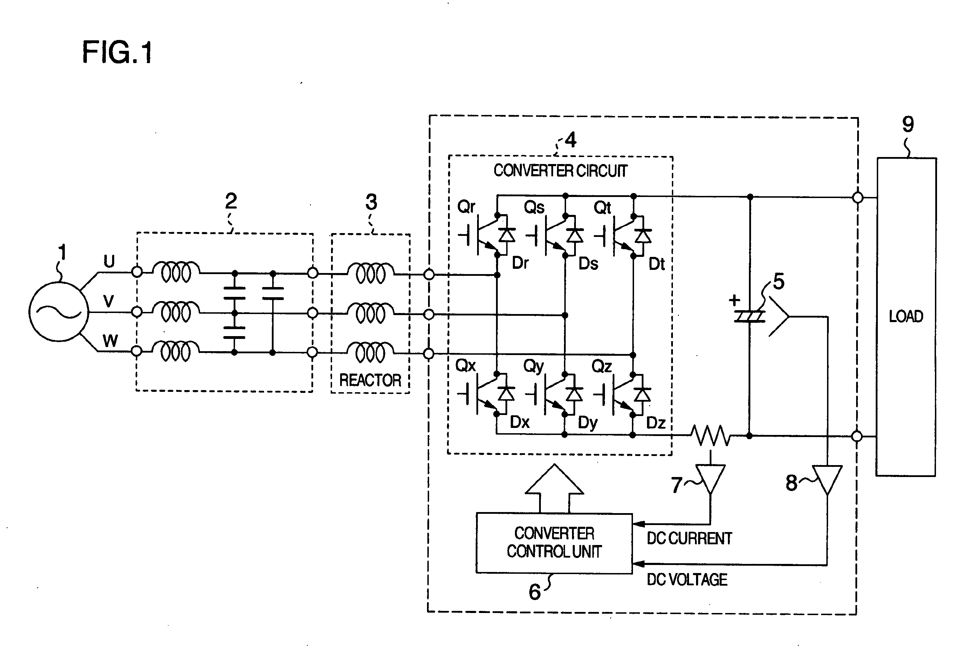

The first embodiment of the present invention is described below in reference to Figs. 1 through 10.

Fig. 1 schematically shows the circuit configuration of a PWM converter apparatus as a first embodiment of the present invention, in an application to the drive of a load.

As shown in Fig. 1, the PWM converter apparatus comprises a converter circuit 4 connected via a ripple filter 2 and a (three-phase) reactor 3 with a three-phase power source 1, a smoothing capacitor 5 and a load 9 both connected with the DC output terminals of the converter circuit 4, a converter control unit 6 for controlling the converter circuit 4, a direct current detector 7 for detecting the direct current through the bus bar, and a DC voltage detector 8. The converter control unit 6 is a semiconductor processing device such as a microcomputer or a digital signal processor (DSP).

In the following description of this specification, it is to be understood that the converter circuit 4 is in the three-phase bridge connection, having on the upper arm switching elements Qr, Qs and Qt, on the lower arm switching elements Qx, Qy and Qz, and the anti-parallel diodes Dr, Ds, Dt, Dx, Dy and Dz provided for the upper and lower arm switching elements.

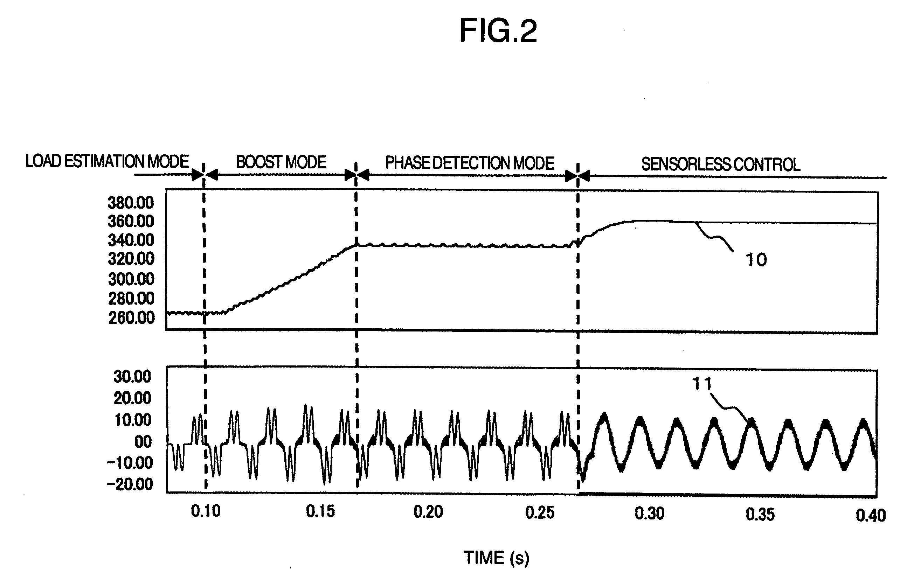

Fig. 2 graphically shows the starting sequence for the converter apparatus shown in Fig. 1. The starting sequence of the converter apparatus as the first embodiment of the present invention proceeds through (1) the load estimation mode, (2) the boost mode and (3) the phase detection mode, and is shifted to the sensor-free control. In the following, the detail of the starting sequence is described.

(1) Load Estimation Mode

The direct current detector 7 for detecting the direct current through the bus bar (hereafter referred to as DC bus current) detects the current flowing through the DC circuit part during the diode-rectifying operation. The DC component of the detected current is extracted through the low-pass filter function or the averaging process over a preset time period, performed by the arithmetic operation (not shown) of the converter control unit 6. When the extracted DC component exceeds a preset value, the converter is started.

(2) Boost Mode

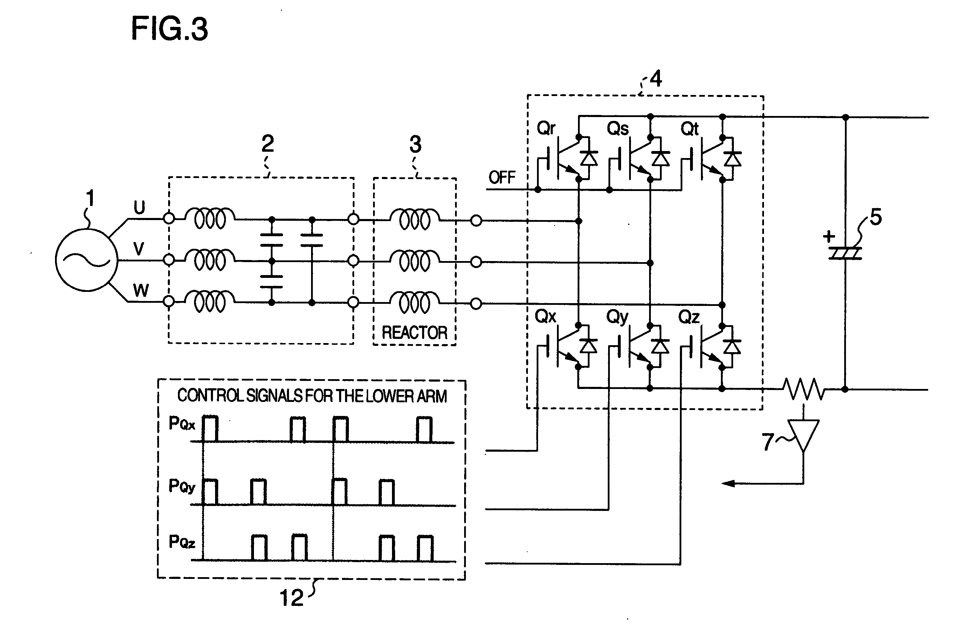

The on/off control signals 12 as shown in Fig. 3 are supplied to the respective switching elements to increase the DC voltage. The on/off control signals 12 are supplied in such a manner that switching elements for two of the three-phases are first turned on and then switching elements for other two phases are turned on, and so forth. For example, when the switching element Qx shifts from the on-state to the off-state, the current flowing through the switching element Qx up to then changes its direction and is fed through the diode Dr into the smoothing capacitor 5 to increase the charged DC voltage across the smoothing capacitor 5. Excessive current at the time when the control sequence shifts to the sensorless control can be suppressed by increasing the DC voltage.

Meanwhile, the off-signals are supplied to all the three-phase switching elements of the upper arm.

Alternatively, the on/off signals 12 may be supplied to the switching elements of the upper arm whereas the off-signals may be supplied to all the three-phase switching elements of the lower arm.

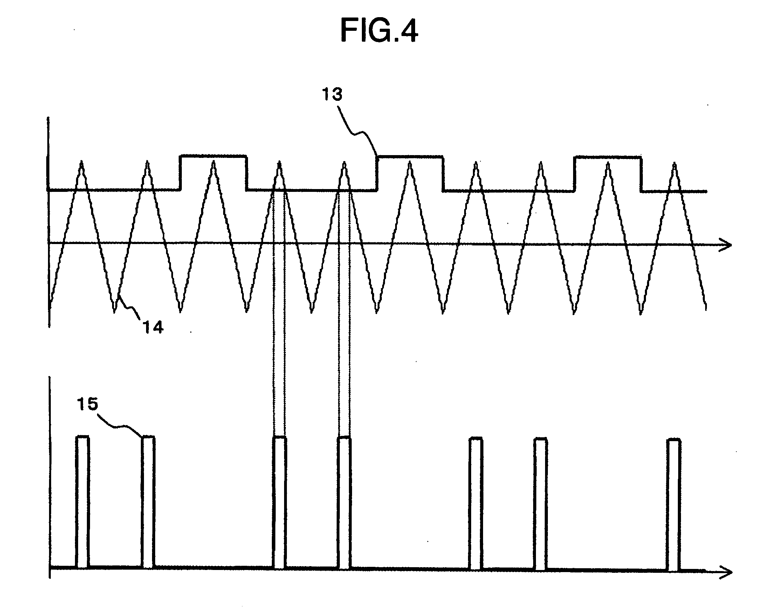

Also, the DC voltage can be adjusted by adjusting the conduction ratio (on-time ratio) for each switching element. In order to avoid excessive voltage or current, the pulse width of each on/off control signal should be increased gradually from zero. These on/off control signals 15 can be obtained as a result of comparison between a triangular carrier 14 and the instruction value 13 of one of the three-phase on/off control signals, as shown in Fig. 4. The three-phase on/off control signals $P_{Qx}$, $P_{Qy}$ and $P_{Qz}$ can be obtained by shifting the respective instruction values by one period of the carrier. Further, in order to secure precision in the phase detection described below, the frequency of the carrier should better be set to several ten to several hundred times the frequency of the power source voltage.

Simultaneously with the increase in the pulse width of each on/off control signal, the DC voltage across the smoothing capacitor 5 is detected by the DC voltage detector 8. When the detected DC voltage becomes equal to or higher than, a preset value, the pulse width of the on/off control signal is fixed and a phase detection process ensues.

(3) Phase Detection Mode

While the switching element is being turned on with the pulse width of the corresponding on/off control signal fixed, the direct current detector 7 for detecting the DC bus current detects the current. Thereafter, the phase detection operation is performed as follows.

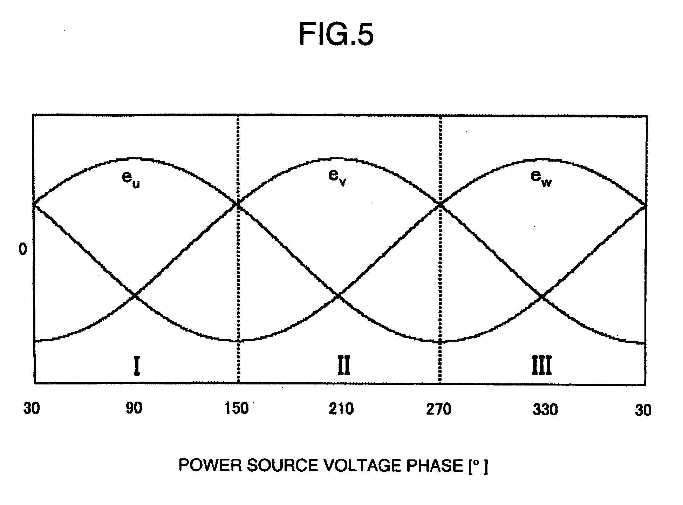

Fig. 5 shows the waveforms of the three-phase voltages of the power source during one period of time. Three regions I - III are defined depending on the relative relationships among the respective phase voltages. Signals representing the detected currents may vary depending on the on/of states of the respective switching elements and the amplitudes of the respective phase voltages.

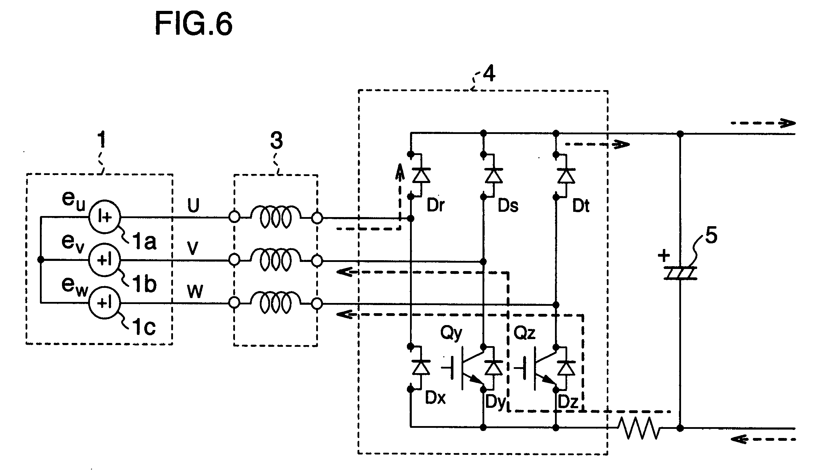

For example, let it be assumed that the switching element Qx is being turned off whereas the switching elements Qy and Qz are being turned on and that the region I shown in Fig. 5 has been reached. Then, since the U-phase voltage $e_u$ is higher than the V-phase and W-phase voltages $e_v$ and $e_w$ as shown in Fig. 5, the diode Dr and the diode Dy or Dz become conductive as shown in Fig. 6 even when the switching elements Qy and Qz are turned on. Accordingly, the DC bus current can be detected. The detected DC bus current corresponds to the U-phase input current.

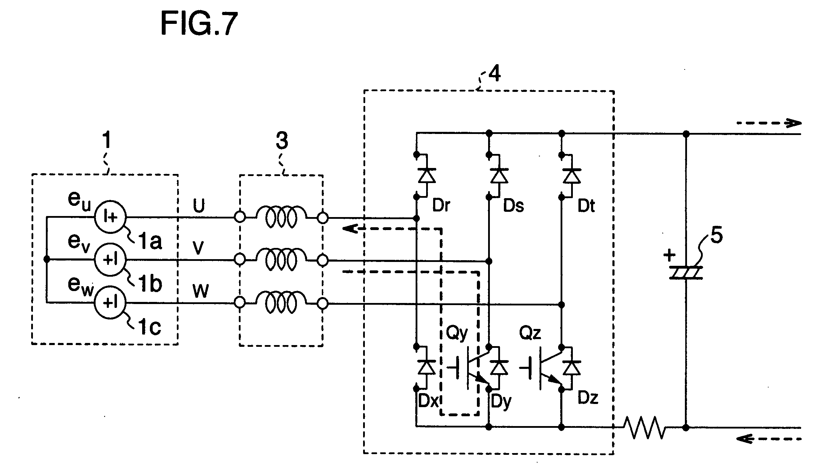

On the contrary, in the regions II and III, since the U-phase voltage $e_u$ is lower than the V-phase voltage $e_v$ or the W-phase voltage $e_w$ as shown in Fig. 5, inter-phase short circuit current will flow through the switching element Qy or Qz as shown in Fig. 7 when the switching elements Qy and Qz become conductive. Accordingly, no DC bus current is detected.

In like manner, only in the case where the switching element Qy is being turned off whereas the switching elements Qx and Qz are being turned on and the region II shown in Fig. 5 has been reached, the V-phase input current can be detected on the basis of the DC bus current. Further, only in the case where the switching element Qz is being turned off whereas the switching elements Qx and Qy are being turned on and the region III shown in Fig. 5 has been reached, the W-phase input current can be detected on the basis of the DC bus current.

As described above, the operating feature is that the DC bus current corresponds to the U-phase input current only in the region I with the switching element Qx turned off and the switching elements Qy and Qz turned on, that the DC bus current corresponds to the V-phase input current only in the region II with the switching element Qy turned off and the switching elements Qx and Qz turned on, and that the DC bus current corresponds to the W-phase input current only in the region III with the switching element Qz turned off and the switching elements Qx and Qy turned on.

In this way, the DC bus current detected when the switching element corresponding to one of the three-phases is being turned off while the switching elements corresponding to the other two of the three-phases are being turned on, is extracted as the input DC current for the phase corresponding to the switching element which is being turned off. To be concrete, the current detected with Qx turned off, and Qy and Qz turned on is defined as the U-phase current; the current detected with Qy turned off, and Qx and Qz turned on is defined as the V-phase current; and the current detected with Qz turned off, and Qx and Qy turned on is defined as the W-phase current.

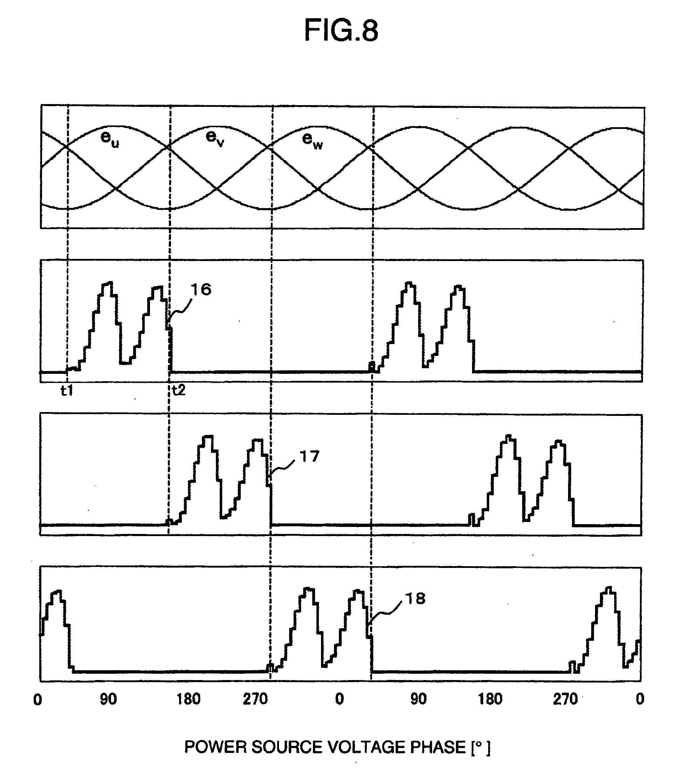

Fig. 8 shows the waveforms of the detected currents extracted as described above. As shown in Fig. 8, since the waveform of the U-phase voltage approximately give the point where the detected current corresponding to the U-phase voltage starts flowing (i.e. the point where the current changes from zero to positive value) and the point where the detected current corresponding to the U-phase voltage ceases flowing (i.e. the point where the current changes from positive value to zero), and since the same is true for the V- and W-phases, the phases of the respective phase voltages of the power source can be estimated. Also, the appearing sequence of the phases of the three-phase voltages can be determined from the appearing sequence of the waveforms of the detected currents. Further, the frequency of the three-phase voltages can be calculated on the basis of the temporal delays observed among the waveforms of the detected currents.

For example, let the waveform 16 of the detected current for the U-phase be taken up. If the time t1 is assumed to be the instant when the detected current starts flowing, the phase of the source voltage corresponding to the instant (current starting point) is approximately 30°. If the time t2 is assumed to be the instant when the detected current ceases flowing, the phase of the source voltage corresponding to the instant (current ceasing point) is approximately 150°.

Thus, the correspondence observed in Fig. 8 enables the phases of the source voltages to be estimated from the detected currents. It should be noted, however, that since the current starting and ceasing points may shift more or less depending on the influence by the magnitudes of the inductance in the power source and of the load, the mid point between the current starting and ceasing points can be used as reference to enhance the precision in detection.

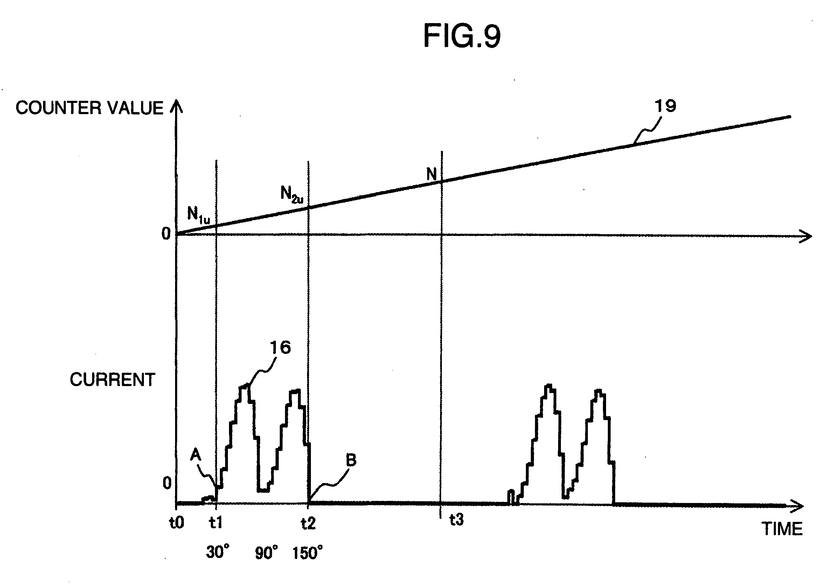

A concrete algorithm for phase estimation executed within the converter control unit 6 will now be described in reference to Fig. 9.

Fig. 9 shows the counter value 19 which is cleared at the time of starting the phase detecting operation (time t0) and thereafter counted up every carrier period, and the waveform 16 of the detected current for the U-phase shown in Fig. 8. In the following description, only the U-phase is taken up for brevity.

After time t0, the converter control unit 6 compares the previous value of the detected current with the present current value or the zero value, and periodically searches for the point where the following conditions are satisfied.

CONDITION 1:    the present value is larger than the previous value and the previous value is zero.
CONDITION 2:    the present value is smaller than the previous value and the present value is zero.

Here, the zero value means that the value of the detected current is zero (an ideal value). In reality, however, the detected current cannot be exactly zero due to the influence by the precision in conversion in the A/D converter and by the noise. Therefore, the detected current must be interpreted as zero when it takes a certain value smaller than a preset value.

In Fig. 9, the point A satisfies the condition 1 and the point B satisfies the condition 2, and the counter value for the condition 1 is stored as $N_{1u}$ and the counter value for the condition 2 is stored as $N_{2u}$.

Accordingly, the counter value $N_{1u}$ (at time t1) corresponding approximately to 30° of the source voltage phase and the counter value $N_{2u}$ (at time t2) corresponding approximately to 150° of the source voltage phase can be detected.

The source voltage phase $\theta_{dc}$ at the present time point (time t3) can now be obtained from the above data by using the expression given below.

$$\theta_{dc} = [N - (N_{2U} + N_{1U}) / 2] \times \Delta\theta + 90°$$

where N denotes the counter value at the present time point (time t3), and $\Delta\theta$ indicates the increment in phase over a carrier period ($\Delta\theta = 360° \times$ power source frequency / carrier frequency).

In the present embodiment, as apparent from the above expression, the averaged phase (90°) is obtained from the two time points corresponding respectively to the conditions 1 and 2, and the present phase is calculated with the obtained phase regarded as the reference phase. Alternatively, however, the present phase may be calculated with the phase corresponding to the condition 1 or 2 regarded as the reference phase after the point corresponding to the condition 1 or 2 has been detected.

In this way, the power source voltage phase at the present time point can be detected on the basis of the detected current value.

In the foregoing description, it is assumed that the phases of the power source voltages appear in the correct sequence, i.e. U, V and W phases in this order named. If the sequence of the power source voltage phases is unknown, it must first be determined.

The method for determining the sequence of the power source voltage phases will be described below.

In order to determine the sequence of phases, the above described detection must be performed for each phase. Although the detailed description is omitted, the sequence of phases can be determined depending on the magnitudes of the counter values ($N_{1u}$, $N_{1v}$, $N_{1w}$, $N_{2u}$, $N_{2v}$, $N_{2w}$) corresponding to the respective phase conditions.

For example, the sequence of the power source voltage phases is in the correct order, i.e. U, V and W, if $N_{1u} < N_{1v} < N_{1w}$, or $N_{1w} < N_{1u} < N_{1v}$, or $N_{1v} < N_{1w} < N_{1u}$.

If $N_{1u} < N_{1w} < N_{1v}$, or $N_{1w} < N_{1v} < N_{1u}$, or $N_{1v} < N_{1u} < N_{1w}$, the sequence of the source voltage phases is in the inverse order of U, W and V.

In the above criterion of determination, $N_{1u}$, $N_{1v}$ and $N_{1w}$ may be replaced by $N_{2u}$, $N_{2v}$ and $N_{2w}$, or ($N_{1u} + N_{2u}$), ($N_{1v} + N_{2v}$) and ($N_{1w} + N_{2w}$).

If judgment is that the sequence of the power source voltage phases is in the inverse order, the order of the phases appearing in sequence is inverse, so that the value of $\Delta\theta$ in the expression given above for calculating the power source voltage phase $\theta_{dc}$ must be set negative (i.e. $\Delta\theta = - 360° \times$ power source frequency / carrier frequency).

Now, the method for detecting the power source voltage frequency will be described. The power source voltage frequency can also be calculated by using the counter values ($N_{1u}$, $N_{1v}$, $N_{1w}$, $N_{2u}$, $N_{2v}$, $N_{2w}$) corresponding to the respective phases in a manner like that used to determine the power source voltage phases. In a simple example, the power source voltage frequency may be obtained from the difference between the counter value (e.g. $N_{1u}$) for the condition 1 for one phase and the counter value (e.g. $N_{2u}$) for the condition 2 for the same phase, or the difference between the two successive counter values for the same phase, separated by one period of time.

In the present embodiment, a method using the difference between the counter values for the conditions 1 or 2 for two phases neighbouring each other is described. It is noted that this method of calculation should be carried out after the determination of the sequence of the power source voltage phases.

Description is made of, for example, a case where $N_{1u} < N_{1v} < N_{1w}$, or $N_{1w} < N_{1u} < N_{1v}$. In this case, the expression for calculating the source frequency is as given below.

$$fs = 120 \times fc / (360 \times | N_{1v} - N_{1u} |) = fc / (3 \times | N_{1v} - N_{1u} |)$$

where fs denotes the power source voltage frequency, fc denotes the carrier frequency, $N_{1u}$ denotes the counter value at the point at which the U-phase current starts flowing, and $N_{1v}$ denotes the counter value at the point at which the V-phase current starts flowing.

After the power source voltage phases, the power source voltage frequency and the sequence of the power source voltage phases have been detected as described above, the control sequence is switched to sensorless control.

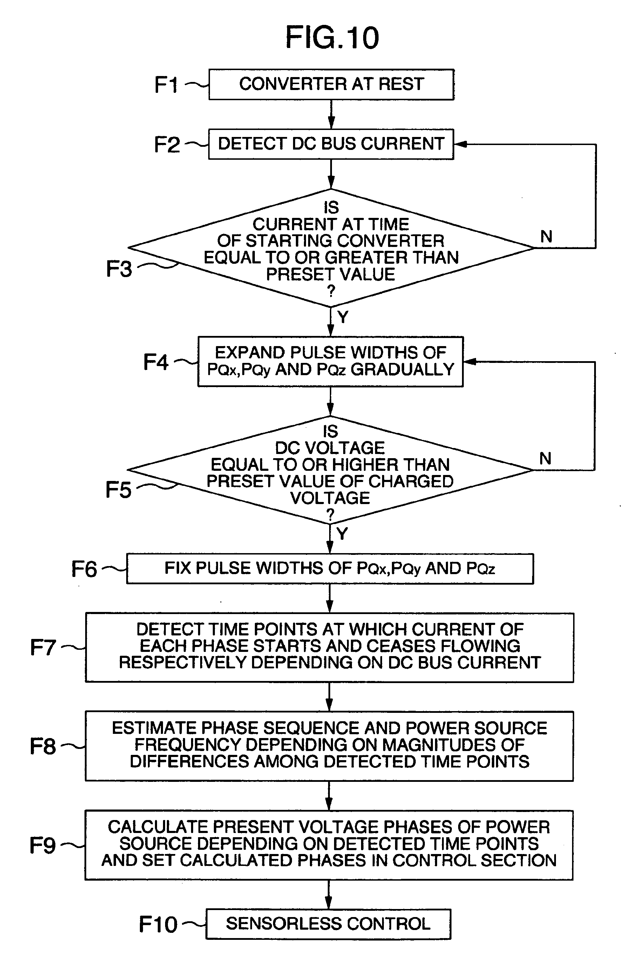

Fig. 10 is the flow chart of a control process including steps up to the start of the converter apparatus.

In the present embodiment, as described above, it is set that the operation of the converter apparatus is not started unless the load to the converter apparatus is equal to or greater than a preset value. Accordingly, the load is first estimated by detecting the DC bus current. In Step F1, the control system is at rest. In Steps F2 and F3, the DC bus current is detected to check whether or not it satisfies the starting condition. When the starting condition is satisfied, the process of elevating the DC voltage is performed in Steps F4 and F5, as described above.

After the DC voltage has been elevated, the widths of the pulses supplied to the switching elements are fixed in Step F6. Then, the power source voltage phases, the sequence of the power source voltage phases and the power source voltage frequency are detected by the above described methods of detecting the power source voltage phases, the sequence of the power source voltage phases and the power source voltage frequency. In Steps F7 ~ F9, the detected data are set in the control section, and the sensor-free control mode is initiated in Step F10.

[EMBODIMENT 2]

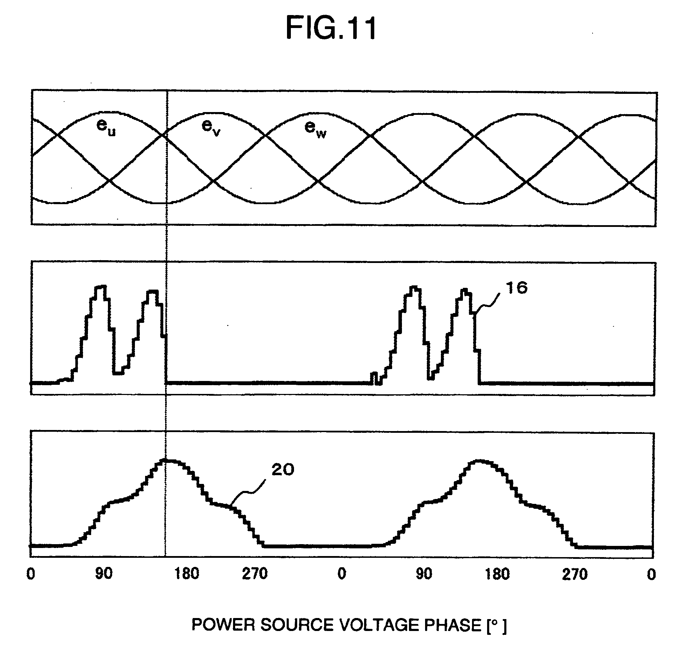

The second embodiment of the present invention will now be described in reference to Figs. 11 through 13.

The present embodiment gives a countermeasure for coping with those currents including noise components which are detected when the phases are to be detected in the first embodiment. Fig. 1 schematically shows a PWM converter apparatus as an embodiment of the present invention. The converter configuration shown in Fig. 1 is that which was described above as the first embodiment.

The on/off control signals for the switching elements and the associated starting sequence are the same as those described above in the first embodiment.

According to the phase detecting method employed in the first embodiment described above, the power source voltage phases are estimated by using the zero-cross points of the waveform of the detected current (i.e. the point at which the detected current starts flowing and the point at which the detected current ceases flowing). In the case, however, where the detected current includes noise components, the zero-cross points are erroneously shifted or judgment errors may occur so that errors in phase estimation will be increased.

Further, comparison between the detected current and zero is necessary to detect the zero-cross points. Actually, as there is influence by the conversion accuracy of the A/D converter and noise, the reference value should not be set exactly to zero, but something larger than zero. If noise components are large, the reference value should also be set larger accordingly.

In order to suppress the influence by the noise, the process of moving average of the detected current is performed. Especially, the current waveforms shown in Fig. 8 have a feature that the detected current exists within one third of the period of the power source. Accordingly, if the interval over which the moving average is set equal to the one third of the period of the power source voltage with respect to the current waveforms shown in Fig. 8, then the maximum value of the output derived from the moving average process can be obtained.

Fig. 11 shows the waveform 16 of the detected U-phase current and the waveform 20 obtained as a result of moving-averaging the detected U-phase current. The time point giving the maximum of the waveform obtained after the moving average corresponds to the time point at which the detected U-phase current ceases flowing. Therefore, the power source voltage phases can be estimated by using the time points corresponding to the maximum values of the waveforms obtained after the moving average, just as according to the conventional phase calculating method.

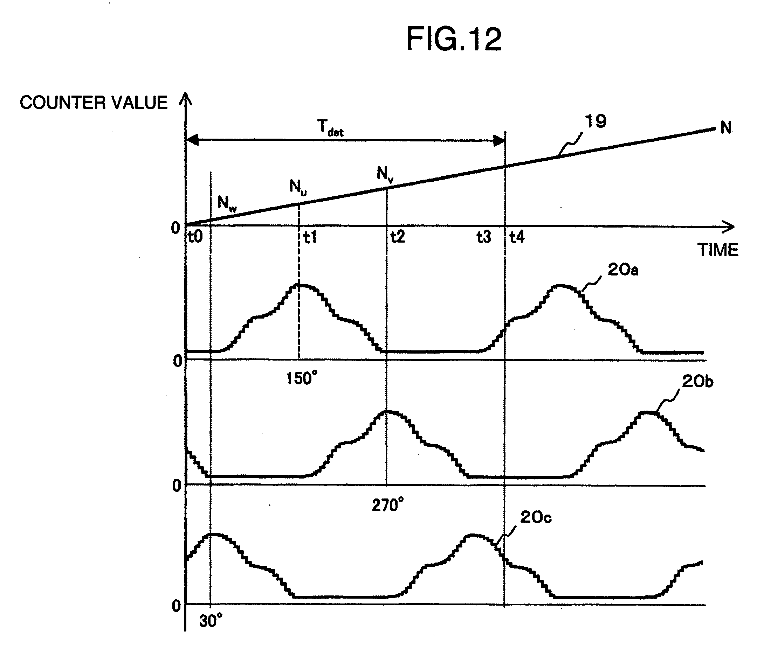

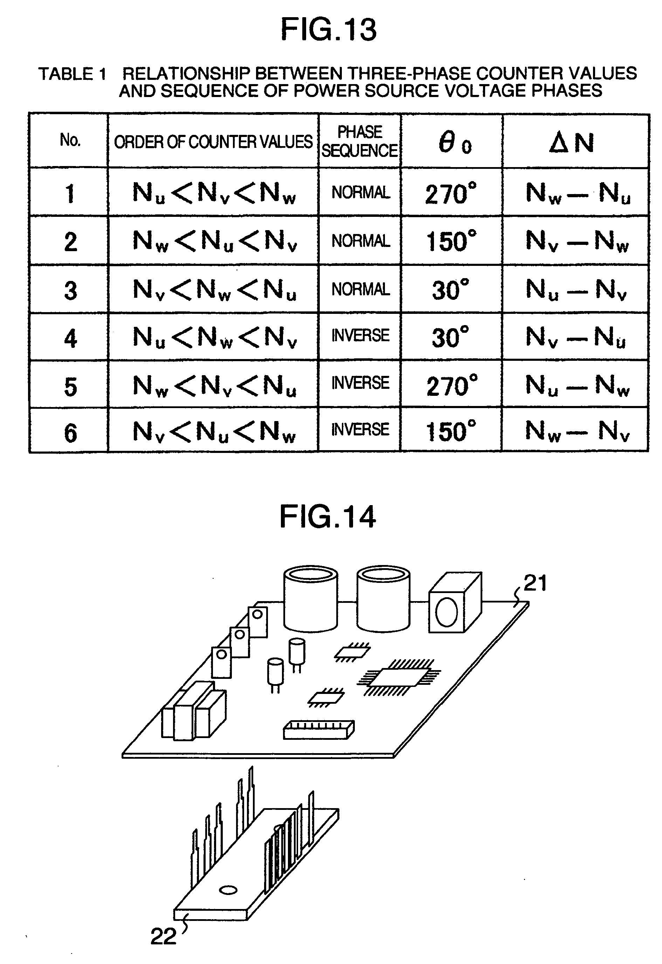

Concrete algorithms for detecting the sequence of the power source voltage phases, the power source voltage frequency and the power source voltage phases will now be described below in reference to Figs. 12 and 13.

Fig. 12 shows the waveforms of three-phase currents 20a, 20b and 20c obtained after the moving average, and the counter value 19 in the microcomputer which is cleared at the time (time t0) of starting the phase detection operation and thereafter counted up every carrier period.

The time points at which the following condition is satisfied are searched for during the time from t0 to t4 (i.e. the counter value corresponding to the maximum of the waveform obtained after the moving average for each phase is searched for).

Condition for Renewing the Counter Value:

the moving average value exceeds the previous maximum value.

Operation:

the maximum moving average value is substituted for the present moving average value and the counter values are stored as $N_x$ (x = u, v and w).

In order to securely detect the maximum values of the moving averages for the three phases during one period of the power source voltage, it is necessary to set the search time $T_{det}$ equal to 1 ~ 4/3 times the power source voltage period. Since the power source voltage frequency is 50Hz or 60Hz, the search time should preferably be determined by the expression given below.

$$T_{det} = (1/50 + 1/60 \times 4/3) / 2 = 0.0211 \text{ [s]}$$

Thus, the search time is obtained as the average of the power source voltage frequency of 50Hz multiplied by 1 and the power source voltage frequency of 60Hz multiplied by 4/3.

After the search of the above described maximum values has been completed (at the time t4), the determination of the sequence of the power source voltage phases, the calculation of power source voltage frequency, and the process of power source voltage phase calculation are performed by using the counter values $N_u$, $N_v$ and $N_w$ corresponding to the maximum values of the respective phase currents, as described below.

(1) Process of Determining Phase Sequence

The phase sequence, $\theta_0$ and $\Delta N$ are determined as given in Fig. 13 (Table 1) depending on the relationships among the magnitudes of the counter values $N_u$, $N_v$ and $N_w$ corresponding to the maximum values of the respective phase currents.

(2) Calculation of Power Source Voltage Frequency

Since the phase corresponding to $\Delta N$ in Fig. 13 is 240°, the power source frequency fs can be obtained by using the expression given below.

$$fs = 240° \times fc / (360° \times \Delta N) \text{ [Hz]}$$

where fs denotes the power source voltage frequency, and fc indicates the carrier frequency.

Since the power source voltage frequency is actually either 50Hz or 60Hz, it can also be determined directly from the magnitude of $\Delta N$.

(3) Calculation of Power Source Voltage Phase

The power source voltage phase can be determined as follows depending on the sequence of the power source voltage phases.
In case of the correct order:

$$\theta_{dc} = \theta_0 + [N - (N_u + N_v + N_w) / 3] \times \Delta\theta \text{ [°]}$$

In case of the inverse order:

$$\theta_{dc} = \theta_0 - [N - (N_u + N_v + N_w) / 3] \times \Delta\theta \text{ [°]}$$

In these expressions, N denotes the counter value at the present time point (time t4), and $\Delta\theta$ indicates the phase increment over one carrier period ($\Delta\theta = 360° \times$ power source voltage frequency / carrier frequency).

After the determination of the sequence of phases, the calculation of power source frequency, and the process of phase calculation have been completed, those data are set in the control section, and the sensor-free control mode is initiated as in the first embodiment.

[EMBODIMENT 3]

The third embodiment of the present invention will be described in reference to Fig. 14. The present embodiment has the three-phase converter apparatus as the first or second embodiment configured in a module.

The circuit configuration of the module is the same as that of the first embodiment shown in Fig. 1.

Fig. 14 depicts the module circuit in a hardware version consisting mainly of a control PCB (printed circuit board) 21 and a power element (power module) 22.

The direct current detector 7 for detecting the DC bus current, the DC voltage detector 8, the converter control unit 6 (one-chip microcomputer) and the converter circuit 4, all shown in Fig. 1, are laid out on the control PCB 21 shown in Fig. 14. The PCB 21 with these devices laid out thereon and the power element 22 are contained together in a single module.

The "module" used here means a "standardized structural unit" and comprises separable parts of hardware/software. From the standpoint of simplicity in fabrication, it is preferable that all the parts are installed on a single PCB. Such a structure, however, is by no means only one available. The parts may be assembled on plural PCBs and the plural PCBs may be contained in a single casing.

According to the present invention, there can be provided a converter module which, even using a three-phase reactor of small capacity, can be smoothly (without phenomena of excessive voltage and current) started up in a short time, that is used in a converter apparatus having an inexpensive circuit structure dispensing with power source voltage sensors, current sensors and phase sensors.

[EMBODIMENT 4]

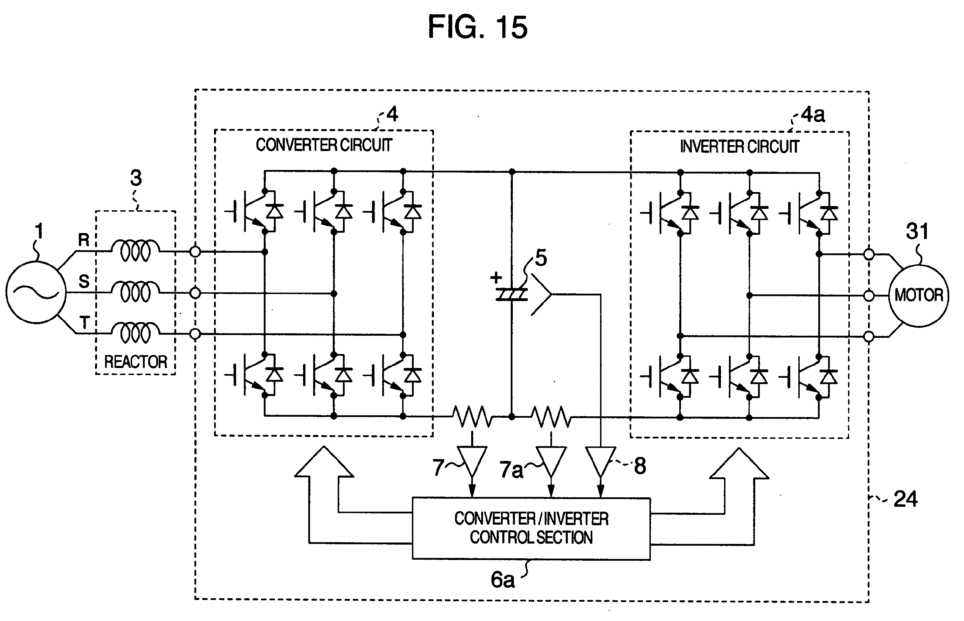

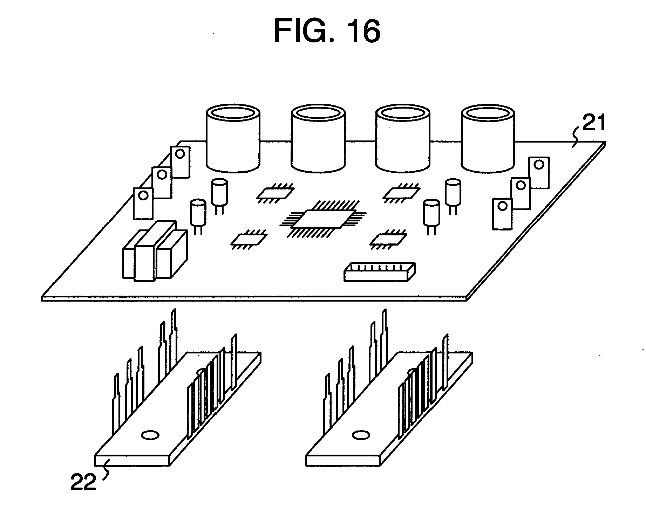

The fourth embodiment of the present invention will now be described in reference to Figs. 15 and 16. The fourth embodiment is in the modular form which includes the three-phase converter apparatus as the first or second embodiment and an inverter apparatus for driving a motor.

A direct current detecting circuit 7a for the inverter, the direct current detector 7 for the converter, the DC voltage detector 8 and a converter/inverter control unit 6a are configured as a part of a one-chip microcomputer. Further, the one-chip microcomputer, the converter circuit 4 and an inverter circuit 4a are laid out on a single PCB, and the PCB is contained in a single module.

The modular form can permit the reduction of the number of parts used for the control section (e.g. common use of the microcomputer, the power source circuit and the DC voltage detecting circuit). Moreover, the common use of the control information in the inverter and converter can make the response in control faster.

In Fig. 15, the parts constituting the module 24 are confined in a broken line rectangle, and a motor 31 is connected with an inverter circuit 4a. The "module" used here means a "standardized structural unit" and comprises separable parts of hardware/software. From the standpoint of simplicity in fabrication, it is preferable that all the parts are installed on a single PCB. Such a structure, however, is by no means only one available. The parts may be assembled on plural PCBs and the plural PCBs may be contained in a single casing. The circuit shown in Fig. 15 employs shunt resistors to detect the current through the bus bar, but the shunt resistors are not only means for that purpose. For example, the shunt resistors may be replaced by ordinary current sensors.

As described above, according to the present invention, there can be provided a PWM converter/inverter module which can be smoothly (without phenomena of excessive voltage and current) started up in a short time, that is used as the combined circuit of a PWM converter apparatus having an inexpensive circuit structure dispensing with AC voltage sensors and AC current sensors and an inverter apparatus for driving a motor.

**Claims**

1.　A converter apparatus comprising a converter circuit (4) for converting alternating current from an AC power source (1) into direct current, a DC bus current detecting circuit (7) for detecting the DC bus current on the DC side of the converter circuit (4), and a control means for controlling converter operation on the basis of the detected value of the DC bus current, wherein

the three switching elements belonging to one of the upper and lower arms of the converter circuit (4) are turned off, each arm including three switching elements corresponding respectively to three phases;

on-signals are supplied to two switching elements of the other arm, and the DC bus current is detected by successively supplying the on-signals to two switching elements of different phases in the other arm; and

the estimation of at least one of the items including the voltage phases of the AC power source, the AC power source frequency and the sequence of the AC power source voltage phases, is made on the basis of the detected value of the DC bus current.

2.　The converter apparatus as claimed in Claim 1, wherein

the DC load (9) connected to the converter apparatus is estimated on the basis of the detected DC bus current while the converter apparatus is at rest;

the converter apparatus is started up if the DC load (9) is greater than a preset value; and

the converter apparatus is shut down if the DC load (9) is smaller than the preset value.

3. The converter apparatus as claimed in Claim 2, wherein

the DC load (9) connected to the converter apparatus is estimated on the basis of a filtered DC bus current passed through a low-pass filter and/or by averaging the DC bus current for a preset duration.

4. The converter apparatus as claimed in Claim 1, wherein

the respective phase currents are reconstructed from the DC bus current; and

the power source voltage phases are detected on the basis of the information on the restored phase currents.

5. The converter apparatus as claimed in Claim 1, wherein

the respective phase currents are reconstructed from the DC bus current; and

each power source voltage phase is detected by using the middle time point between the time point at which the corresponding phase current starts flowing and the time point at which the same phase current ceases flowing.

6. The converter apparatus as claimed in Claim 1, wherein

the time point at which the DC bus current ceases flowing or becomes less than a preset value, is detected;

the time point at which the DC bus current starts flowing or becomes equal to or more than a preset value, is detected; and

each power source voltage phase is detected by using the detected time points.

7. The converter apparatus as claimed in Claim 1, wherein

the detected DC bus current is broken up into component currents of respective phases by using the relationship between the detected DC bus current and the switching elements supplied with the on/off signals (12); and

the estimation of at least one of the items including the AC power source voltage phases, the AC power source frequency and the sequence of the AC power source voltage phases, is made on the basis of the time differences in respective phases among the first time point at which the component current of each phase becomes less than a preset value, the second time point at which the same current component becomes equal to or more than the preset value, or the third time point giving the average of the first and second time points.

8. The converter apparatus as claimed in Claim 1, wherein

the detected DC bus current is broken up into component currents of respective phases by using the relationship between the detected DC bus current and the switching elements supplied with the on/off signals (12) ;

detection is made of at least two of the first time points at which the component current of each phase becomes less than a preset value, at least two of the second time points at which the same current component becomes equal to or more than the preset value, or at least two of the third time points giving the average of the first and second time points; and

the estimation of at least one of the items including the AC power source voltage phases, the AC power source frequency and the sequence of the AC power source voltage phases, is made on the basis of the time difference between the two first time points, the two second time points or the two third time points.

9. The converter apparatus as claimed in Claim 1, wherein

the detected DC bus current is broken up into component currents of respective phases by using the relationship between the detected DC bus current and the switching elements supplied with the on/off signals (12);

detection is made of the first time point pair respectively at which two component currents of two different phases become less than a preset value, the second time point pair respectively at which the same component currents become equal to or more than the preset value, or the third time point pair giving the averages of the first and second time point pairs; and

the AC power source voltage frequency is estimated on the basis of the time difference between the first time point pair, the second time point pair or the third time point pair.

10. The converter apparatus as claimed in Claim 1, wherein

the detected DC bus current is broken up into component currents of respective phases by using the relationship between the detected DC bus current and the switching elements supplied with the on/off signals (12); and

the estimation of at least one of the items including the AC power source voltage phases, the AC power source frequency and the sequence of the AC power source voltage phases, is made by subjecting the component currents to moving average process and using the maximum value obtained as a result of the moving average process.

**11.** The converter apparatus as claimed in Claim 1, wherein the on-signals supplied to two of the three switching elements for three-phases are outputted in sequential separation from each other by an integral multiple of the period at which each switching element is operated.

**12.** The converter apparatus as claimed in Claim 1, wherein the pulse widths of the on-signals supplied to two of the three switching elements for three phases are so adjusted as to cause the DC voltage developed between the DC terminals to become equal to a preset value.

**13.** The converter apparatus as claimed in Claim 1, wherein
before the converter apparatus is started up, the on/off control signals (12) are sequentially supplied to the switching elements of the upper arm or the switching elements of the lower arm, the switching elements of the upper and lower arms constituting the converter circuit (4); and
the DC voltage developed across the smoothing capacitor (5) is elevated up to a preset value by adjusting the pulse width of the on/off control signal (12).

# FIG.1

CONVERTER CIRCUIT

Qr  Qs  Qt

Dr  Ds  Dt

Qx  Qy  Qz

Dx  Dy  Dz

REACTOR

LOAD

CONVERTER
CONTROL UNIT

DC CURRENT

DC VOLTAGE

EP 2 023 476 A2

# FIG.2

LOAD ESTIMATION MODE | BOOST MODE | PHASE DETECTION MODE | SENSORLESS CONTROL

TIME (s)

EP 2 023 476 A2

## FIG.3

# FIG.4

EP 2 023 476 A2

# FIG.5

POWER SOURCE VOLTAGE PHASE [°]

# FIG.6

EP 2 023 476 A2

# FIG.7

EP 2 023 476 A2

# FIG.8

POWER SOURCE VOLTAGE PHASE [° ]

# FIG.9

EP 2 023 476 A2

# FIG.10

F1 — CONVERTER AT REST

F2 — DETECT DC BUS CURRENT

F3 — IS CURRENT AT TIME OF STARTING CONVERTER EQUAL TO OR GREATER THAN PRESET VALUE ?  — N

Y

F4 — EXPAND PULSE WIDTHS OF $P_{Qx}, P_{Qy}$ AND $P_{Qz}$ GRADUALLY

F5 — IS DC VOLTAGE EQUAL TO OR HIGHER THAN PRESET VALUE OF CHARGED VOLTAGE ? — N

Y

F6 — FIX PULSE WIDTHS OF $P_{Qx}, P_{Qy}$ AND $P_{Qz}$

F7 — DETECT TIME POINTS AT WHICH CURRENT OF EACH PHASE STARTS AND CEASES FLOWING RESPECTIVELY DEPENDING ON DC BUS CURRENT

F8 — ESTIMATE PHASE SEQUENCE AND POWER SOURCE FREQUENCY DEPENDING ON MAGNITUDES OF DIFFERENCES AMONG DETECTED TIME POINTS

F9 — CALCULATE PRESENT VOLTAGE PHASES OF POWER SOURCE DEPENDING ON DETECTED TIME POINTS AND SET CALCULATED PHASES IN CONTROL SECTION

F10 — SENSORLESS CONTROL

# FIG.11

POWER SOURCE VOLTAGE PHASE [°]

FIG.12

# FIG.13

TABLE 1   RELATIONSHIP BETWEEN THREE-PHASE COUNTER VALUES
AND SEQUENCE OF POWER SOURCE VOLTAGE PHASES

| No. | ORDER OF COUNTER VALUES | PHASE SEQUENCE | $\theta_0$ | $\Delta N$ |
|---|---|---|---|---|
| 1 | $N_u < N_v < N_w$ | NORMAL | $270°$ | $N_w - N_u$ |
| 2 | $N_w < N_u < N_v$ | NORMAL | $150°$ | $N_v - N_w$ |
| 3 | $N_v < N_w < N_u$ | NORMAL | $30°$ | $N_u - N_v$ |
| 4 | $N_u < N_w < N_v$ | INVERSE | $30°$ | $N_v - N_u$ |
| 5 | $N_w < N_v < N_u$ | INVERSE | $270°$ | $N_u - N_w$ |
| 6 | $N_v < N_u < N_w$ | INVERSE | $150°$ | $N_w - N_v$ |

# FIG.14

# FIG. 15

# FIG. 16

**EP 2 023 476 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006025587 A

**Non-patent literature cited in the description**

- *Institute of Electrical Engineers of Japan (IEEJ,* December 1994, vol. 114-D (12